# EUROPÄISCHE PATENTSCHRIFT

(11) **EP 4 067 270 B1**
(45) Veröffentlichungstag und Bekanntmachung des Hinweises auf die Patenterteilung: **30.10.2024**
(21) Anmeldenummer: 22163830.7
(22) Anmeldetag: 23.03.2022
(51) Int. Cl.: B65G 47/86, B08B 9/42

(54) **KLAMMERVORRICHTUNG UND VERFAHREN ZUM TRANSPORTIEREN EINES BEHÄLTERS**
CLAMP DEVICE AND METHOD FOR TRANSPORTING A CONTAINER
DISPOSITIF DE SERRAGE ET PROCÉDÉ DE TRANSPORT D'UN RÉCIPIENT

(30) Priorität: 24.03.2021 DE 102021107294
(43) Veröffentlichungstag der Anmeldung: 05.10.2022
(60) Teilanmeldung: 24201833.1
(73) Patentinhaber: KRONES AG, 93073 Neutraubling (DE)
(72) Erfinder: LEIDEL, Marco, 93073 Neutraubling (DE)
(74) Vertreter: v. Bezold & Partner Patentanwälte - PartG mbB

(56) Entgegenhaltungen:
- EP-A1- 3 613 683
- DE-A1- 102018 104 112
- DE-A1- 19 740 892
- DE-U1- 20 305 988

## Beschreibung

### Technisches Gebiet

Die Erfindung betrifft eine Klammervorrichtung zum Halten eines Behälters und ein Verfahren zum Transportieren eines Behälters.

### Technischer Hintergrund

In Behälterbehandlungsanlagen zum Herstellen, Reinigen, Füllen, Verschließen usw. von Behältern können Behälter mittels Greifer- bzw. Klammervorrichtungen gehalten und durch die Anlage transportiert werden.

Beispielsweise offenbart die DE 10 2005 014 838 A1 eine Klammer zum Halten von Gefäßen in Gefäßtransportmaschinen, mit zwei Klammerarmen, die zum Öffnen und Schließen relativ zueinander beweglich sind. Jeder Klammerarm weist einen Greifarm und mindestens ein Klammerarm einen Gegenarm auf. Zur Vereinfachung der Konstruktion, wobei die Gefäße weiterhin exakt zentriert werden und Überdrückungskräfte absorbiert werden können, ist der Klammerarm mit Greifarm und Gegenarm so einstückig ausgebildet, dass der Greifarm formstabil und der Gegenarm formelastisch ausgebildet ist.

Mit herkömmlichen Lösungen können keine unterschiedlichen Durchmesser an Behältern (z. B. Flaschen) gegriffen werden. Eingezogene, bauchige, konische etc. Behälter können nur unter großem Aufwand oder gar nicht von Multigarnituren im nicht-zylindrischen Bereich gehalten werden. Konturierte Flaschen werden folglich sehr weit unten gegriffen oder bewusste Fehlgriffe werden in Kauf genommen, was große Auswirkungen auf Produktqualität und Prozesssicherheit hat.

Die EP 3 613 683 A1 betrifft eine Greifereinheit zum Greifen eines Behälters umfassend ein erstes Klammerarmpaar und ein zweites Klammerarmpaar, die zum gleichzeitigen Halten des Behälters übereinander angeordnet sind und die voneinander unabhängig schwenkbar sind, sowie eine erste Betätigungseinrichtung, die zum Bewirken des Schwenkens des ersten Klammerarmpaares in Wirkverbindung mit dem ersten Klammerarmpaar ist und eine zweite Betätigungseinrichtung, die zum Bewirken des Schwenkens des zweiten Klammerarmpaares in Wirkverbindung mit dem zweiten Klammerarmpaar ist, nämlich entkoppelt von der ersten Betätigungseinrichtung, Die EP 3 613 683 A1 betrifft auch ein Verfahren zum Transportieren eines Behälters mittels einer entsprechenden Greifereinheit.

Die DE 203 05 988 U1 offenbart einen Transportstern für Gefäße oder dergleichen, mit einem rotierbaren Grundkörper und mehreren über dessen Umfang verteilten Greifeinrichtungen zum Greifen der Gefäße. Jede Greifeinrichtung weist paarweise korrespondierende und zum Grundkörper radial angeordnete Greifarm sowie eine beweglich angeordnete Steuereinrichtung zum Öffnen und Schließen der Greifarme auf. Der Grundkörper weist einen einzigen Tragring auf. Jede Greifeinrichtung besitzt einen Zentralkörper, mit dem die eine Einheit bildende Greifeinrichtung biegesteif an dem Tragring befestigt ist.

Die DE 10 2018 104112 A1 betrifft einen Greifer für ein Behältertransportsystem, mit zwei zueinander verschwenkbar angeordneten Greifarmen, einer rotierbaren Steuereinheit zum Verschwenken der Greifarme sowie wenigstens einem die beiden Greifarme aufeinander zu vorspannenden Federelement. Um einen Greifer sowie eine Transportvorrichtung bereitzustellen, ist vorgesehen, dass an der Steuereinheit mindestens zwei Steuerrollen um eine zentrale Steuerachse schwenkbar und/oder rotierbar angeordnet sind und an jedem der Greifarme wenigstens eine innere Steuerfläche vorgesehen ist, wobei die mindestens zwei Steuerrollen zum Verschwenken der Greifarme mittels der Steuereinheit auf jeweils einer Steuerfläche eines Greifarms abrollend geführt sind und dabei unter der die Greifarme schließenden Kraft des wenigstens einen Federelements die beiden Greifarme öffnend oder schließend bewegen.

Die DE 197 40 892 A1 offenbart einen Transportstern für Gefäße mit einem um eine Achse drehbaren Grundkörper und mehreren konzentrisch um die Achse abgeordneten Klemmelementen. Die Klemmelemente sind als Doppelhebel mit radial nach außen weisenden Greifarmen und nach innen weisenden Gegenarmen ausgebildet. An den Gegenarmen greift eine Betätigungseinrichtung an, durch welche die Klemmelemente wahlweise in eine geöffnete bzw. in eine geschlossene Position verbringbar sind. Die Betätigungseinrichtung ist als Kniehebel-Mechanik ausgebildet. Eine Feder ist vorgesehen, die zwischen den Gegenarmen eine Zugkraft ausübt.

Der Erfindung liegt die Aufgabe zu Grunde, eine verbesserte Technik zum Halten von Behältern zu schaffen. Bevorzugt sollen mit der Technik auch Behälter prozesssicher und beschädigungsfrei gehalten werden können, deren Mantelfläche unterschiedlich geformte und/oder unterschiedlich große Abschnitte aufweist.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt betrifft eine Klammervorrichtung (z. B. Doppel-Klammervorrichtung, Doppelstock-Klammervorrichtung oder Mehrfach-Klammervorrichtung) zum Halten eines Behälters für eine Behälterbehandlungsanlage (z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel). Die Klammervorrichtung weist ein erstes (z. B. unteres oder oberes) Klammerarmpaar und ein zweites (z. B. oberes oder unteres) Klammerarmpaar auf, die zum gleichzeitigen Halten des Behälters (z. B. direkt) übereinander angeordnet sind, und die voneinander unabhängig, nämlich entkoppelt, zwischen einer Öffnungsstellung und einer Schließstellung schwenkbar sind, nämlich koaxial um eine gemeinsame Schwenkachse.

Vorteilhaft weisen die beiden Klammerarmpaare aufgrund der voneinander unabhängigen Verschwenkbarkeit einen zusätzlichen Freiheitsgrad gegenüber herkömmlichen Lösungen auf. Vorteilhaft ermöglicht die Klammervorrichtung das Halten eines Behälters an unterschiedlichen Außenformen und/oder Außenabmessungen des Behälters. Eine Anzahl von Fehlgriffen kann auch bei aufwendiger Formgebung des Behälters verringert werden. Dadurch kann letztlich eine höhere Produktqualität und eine größere Prozesssicherheit gewährleistet werden. Insgesamt kann eine erhöhte Flexibilität hinsichtlich unterschiedlicher Formen und Größen von Behältern, die von der Klammervorrichtung gehalten und somit in der Behälterbehandlungsanlage verarbeitet werden können, erreicht werden. Die Lösung erlaubt zudem das Handhaben von Behältern mit "normalen" Behälterformen (zum Beispiel mit zylindrischem Behälterrumpf). Damit kann beispielsweise ein schneller Formatwechsel zwischen zylindrischen Behältern und Konturbehältern erfolgen, ohne dass die Klammervorrichtungen an der Transportvorrichtung gewechselt werden müssen. Nachfolgend sind besonders bevorzugte Ausführungsbeispiele beschrieben, mit denen vorteilhaft die genannten Vorteile besonders wirkungsvoll erreicht werden können.

Beispielsweise können die Behälter als Flaschen, Dosen, Kanister, Kartons, Flakons usw. ausgeführt sein. Beispielsweise können die Behälter eine eingezogene, bauchige, konische, sich abschnittsweise verjüngende, sich abschnittsweise erweiternde oder allgemein konturierte (z. B. Mantel bzw. Außenumfangs-) Form aufweisen.

Bevorzugt kann der Behälter einen ersten Außenumfangsabschnitt und einen zweiten Außenumfangsabschnitt aufweisen, die bezüglich einer Hochachse des Behälters voneinander versetzt sind und die sich in einer Größe (z. B. Querschnittsgröße oder Durchmesser) und/oder einer Form voneinander unterscheiden. Beispielsweise kann der Behälter von dem ersten Klammerarmpaar an dem ersten Außenumfangsabschnitt haltbar oder gehalten sein, und der Behälter kann von dem zweiten Klammerarmpaar an dem zweiten Außenumfangsabschnitt haltbar oder gehalten sein.

Vorzugsweise kann sich das erste Klammerarmpaar in einer ersten Horizontalebene erstrecken, und das zweite Klammerarmpaar kann sich in einer zweiten Horizontalebene, die von der ersten Horizontalebene beabstandet ist, erstrecken.

In einem Ausführungsbeispiel weist das erste Klammerarmpaar zwei erste, vorzugsweise (z. B. mittels einer ersten Betätigungseinrichtung) miteinander gekoppelte, Klammerarme zum Anlegen an den Behälter auf, die gegensinnig zueinander schwenkbar sind (zum Beispiel um einen Drehzapfen der Klammervorrichtung). Alternativ oder zusätzlich weist das zweite Klammerarmpaar zwei zweite, vorzugsweise (z. B. mittels einer zweiten Betätigungseinrichtung) miteinander gekoppelte, Klammerarme zum Anlegen an den Behälter auf, die gegensinnig zueinander und unabhängig von den zwei ersten Klammerarmen schwenkbar sind (zum Beispiel um einen weiteren Drehzapfen der Klammervorrichtung), vorzugsweise koaxial zu den zwei ersten Klammerarmen.

Es ist möglich, dass die zwei ersten Klammerarme separat voneinander ausgebildet sind oder integral-einstückig miteinander ausgebildet sind. Alternativ oder zusätzlich können die zwei zweiten Klammerarme separat voneinander ausgebildet sein oder integral-einstückig miteinander ausgebildet sein.

In einem Ausführungsbeispiel sind das erste Klammerarmpaar und das zweite Klammerarmpaar derart unabhängig voneinander schwenkbar, dass der Behälter beim gleichzeitigen Halten durch das erste Klammerarmpaar und das zweite Klammerarmpaar an unterschiedlich großen und/oder unterschiedlichen geformten Außenumfangsabschnitten des Behälters haltbar ist.

In einem weiteren Ausführungsbeispiel sind das erste Klammerarmpaar und das zweite Klammerarmpaar derart unabhängig voneinander schwenkbar, dass ein, vorzugsweise mittels Vorspannung bewirktes, Einschwenken (bzw. Schließen) des ersten Klammerarmpaares bis zur Anlage an den Behälter fortgesetzt wird, auch wenn ein, vorzugsweise mittels Vorspannung bewirktes, Einschwenken des zweiten Klammerarmpaares durch Anlage an den Behälter bereits endet.

In einem weiteren Ausführungsbeispiel sind das erste Klammerarmpaar und das zweite Klammerarmpaar derart unabhängig voneinander schwenkbar, dass ein, vorzugsweise mittels Betätigung bewirktes, Aufschwenken (bzw. Öffnen) des ersten Klammerarmpaares entkoppelt von einem, vorzugsweise mittels Betätigung bewirkten, Aufschwenken des zweiten Klammerarmpaares erfolgt.

In einer Ausführungsform sind das erste Klammerarmpaar und das zweite Klammerarmpaar baugleich und/oder im Wesentlichen spiegelsymmetrisch bezüglich einer Horizontalebene ausgebildet.

Vorteilhaft können somit bspw. Herstellungskosten der Klammervorrichtung reduziert und/oder eine Montage der Klammervorrichtung erleichtert werden.

In einer weiteren Ausführungsform weist die Klammervorrichtung ferner einen, vorzugsweise im Wesentlichen blockförmigen und/oder länglichen, Klammerträger auf, der das erste Klammerarmpaar und das zweite Klammerarmpaar schwenkbar trägt (z. B. an mindestens einem Drehzapfen des Klammerträgers), vorzugsweise an einander entgegengesetzten Endbereichen des Klammerträgers (z. B. oberer Endbereich und unterer Endbereich des Klammerträgers bezüglich einer Hochachse der Klammervorrichtung). Vorteilhaft kann somit eine kompakte und stabile Klammervorrichtung geschaffen werden, die auf einfache Weise als Ganzes bspw. nur mittels des Klammerträgers an einer Transportvorrichtung zu montieren ist.

In einer weiteren Ausführungsform weist die Klammervorrichtung ferner eine erste Betätigungseinrichtung, die zum Bewirken des Schwenkens (z. B. zum Öffnen) des ersten Klammerarmpaares in Wirkverbindung mit dem ersten Klammerarmpaar ist, auf. Alternativ oder zusätzlich weist die Klammervorrichtung ferner eine zweite Betätigungseinrichtung auf, die zum Bewirken des Schwenkens (z. B. zum Öffnen) des zweiten Klammerarmpaares in Wirkverbindung mit dem zweiten Klammerarmpaar ist, vorzugsweise entkoppelt von der ersten Betätigungseinrichtung. Vorteilhaft kann mittels der Betätigungseinrichtungen bspw. ein Öffnen bzw. Aufschwenken der Klammerarmpaare bewirkt werden, das im Vergleich der Klammerarmpaare bzw. der Betätigungseinrichtungen bspw. auch zeitlich verzögert beginnen kann.

In einer weiteren Ausführungsform sind die erste Betätigungseinrichtung und die zweite Betätigungseinrichtung (z. B. direkt) übereinander angeordnet und/oder baugleich und/oder im Wesentlichen spiegelsymmetrisch bezüglich einer Horizontalebene ausgebildet und/oder von einem Klammerträger der Klammervorrichtung getragen und/oder als Rollenansteuerungen ausgeführt und/oder zwischen dem ersten Klammerarmpaar und dem zweiten Klammerarmpaar angeordnet. Vorteilhaft können somit Herstellungskosten der Betätigungseinrichtungen verringert und eine Montage der Klammervorrichtung vereinfacht werden. Vorteilhaft kann ferner eine kompakte Bauform und/oder eine sichere Ansteuerung der Betätigungseinrichtungen erzielt werden.

In einer weiteren Ausführungsform weist mindestens eine von der ersten Betätigungseinrichtung und der zweiten Betätigungseinrichtung zwei Schwenkarme auf. Vorzugsweise sind die zwei Schwenkarme V-förmig (bzw. scherenartig) angeordnet und/oder in Reaktion auf eine mechanische Eingabe an der jeweiligen Betätigungseinrichtung hin- und herverschiebbar und/oder an je einem Klammerarm des jeweiligen in Wirkverbindung befindlichen Klammerarmpaares schwenkbar angebracht (z. B. jeweils in einem mittleren Abschnitt der Klammerarme bzgl. einer Längsachse der Klammerarme).

In einer Ausführungsvariante sind die zwei Schwenkarme, vorzugsweise koaxial, schwenkbar an einem verschiebbaren Übertragungselement angebracht. Vorzugsweise kann das Übertragungselement in einem Klammerträger der Klammervorrichtung verschiebbar gelagert sein (z. B. in einer Gleitlagerbuchse und/oder einem Durchgangsloch (z. B. zwischen einer Vorderseite und einer Rückseite des Klammerträgers)) und/oder stangenförmig sein und/oder ein Eingabeelement, vorzugsweise eine drehbare Rolle oder einen Gleitschuh, tragen (z. B. endseitig und/oder auf einer Rückseite/einer dem Behälter abgewandten Seite der Klammervorrichtung oder des Klammerträgers).

In einer weiteren Ausführungsvariante weist die Klammervorrichtung ferner ein erstes Vorspannelement, vorzugsweise eine Schraubenfeder, das das erste Klammerarmpaar vorspannt, vorzugsweise zum Schließen, auf. Alternativ oder zusätzlich weist die Klammervorrichtung ferner ein zweites Vorspannelement, vorzugsweise eine Schraubenfeder, das das zweite Klammerarmpaar vorspannt, vorzugsweise zum Schließen, auf. Vorzugsweise können das erste Vorspannelement und das zweite Vorspannelement übereinander angeordnet sein und/oder sich parallel erstrecken. Vorteilhaft kann somit ein Schließen der Klammerarmpaare bewirkt werden, ohne dass hierfür eine gesonderte Betätigung notwendig wäre. Zudem kann eine Haltekraft bzw. Klemmkraft zum Halten des Behälters erzeugt werden.

Beispielsweise kann das erste und/oder zweite Vorspannelement als ein elastisches Element, z. B. eine Feder (bspw. Schraubenfeder oder U-Feder) oder ein Gummistück, oder als ein Magnet ausgeführt sein.

In einer weiteren Ausführungsvariante stützt sich mindestens eines von dem ersten Vorspannelement und dem zweiten Vorspannelement an einem Klammerträger der Klammervorrichtung (z. B. an einer Rückseite des Klammerträgers) und/oder an einer Betätigungseinrichtung der Klammervorrichtung (z. B. an einem Übertragungselement der Betätigungseinrichtung) ab. Alternativ oder zusätzlich umgibt mindestens eines von dem ersten Vorspannelement und dem zweiten Vorspannelement einen Abschnitt (z. B. das Übertragungselement) einer Betätigungseinrichtung der Klammervorrichtung (z. B. koaxial) und/oder ist auf einer dem Behälter abgewandten Seite eines Klammerträgers der Klammervorrichtung angeordnet.

Ein weiterer Aspekt betrifft eine (z. B. Linear- oder Karussell-) Transportvorrichtung, vorzugsweise einen drehbaren Klammerstern, für Behälter für eine Behälterbehandlungsanlage. Die Transportvorrichtung weist mindestens eine Klammervorrichtung wie hierin offenbart auf.

Es ist möglich, dass mehrere Klammervorrichtungen wie hierin offenbart umfasst sind, die bspw. verteilt um einen Umfang der Transportvorrichtung oder entlang der Transportvorrichtung angeordnet sind.

Beispielsweise kann die Transportvorrichtung in einer Behälterbehandlungsvorrichtung (z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel) integriert sein oder als reine Transportvorrichtung, z. B. zum Transport von Behältern von / zu einer Behälterbehandlungsvorrichtung, ausgebildet und/oder angeordnet sein.

In einem Ausführungsbeispiel weist die Transportvorrichtung eine gemeinsame Führungskontur auf, die dazu ausgebildet ist, in Wirkverbindung mit dem ersten Klammerarmpaar und dem zweiten Klammerarmpaar das erste Klammerarmpaar und das zweite Klammerarmpaar zu verschwenken, vorzugsweise zum Öffnen des ersten Klammerarmpaares und des zweiten Klammerarmpaares. Vorzugsweise kann somit auf einfache Weise mittels einer einzigen Führungskontur eine Betätigung des ersten und zweiten Klammerarmpaares erfolgen.

Ein weiterer Aspekt betrifft ein Verfahren, nach Anspruch 13, zum Transportieren eines Behälters mittels einer Klammervorrichtung wie hierin offenbart oder mittels einer Transportvorrichtung wie hierin offenbart. Der Behälter weist einen ersten Außenumfangsabschnitt und einen zweiten Außenumfangsabschnitt auf, die bezüglich einer Hochachse des Behälters voneinander versetzt sind, und die sich in einer Größe (z. B. Querschnittsgröße oder Durchmesser) und/oder einer Form voneinander unterscheiden. Das Verfahren weist ein voneinander unabhängiges (z. B. entkoppeltes), vorzugsweise mittels Vorspannung bewirktes, (z. B. Zu- oder Ein-) Schwenken eines ersten Klammerarmpaares und eines zweiten Klammerarmpaares, um eine gemeinsame Schwenkachse, die übereinander angeordnet sind, bis sich das erste Klammerarmpaar an dem ersten Außenumfangsabschnitt und das zweite Klammerarmpaar an dem zweiten Außenumfangsabschnitt (z. B. jeweils beidseitig) anlegt (z. B. nacheinander), sodass der Behälter gleichzeitig von dem ersten Klammerarmpaar und dem zweiten Klammerarmpaar gehalten ist, auf. Vorzugsweise lassen sich mit dem Verfahren die gleichen Vorteile erzielen, die hierin bereits für die Klammervorrichtung beschrieben sind.

Beispielsweise kann das Verfahren ferner ein Bewegen des ersten und zweiten Klammarmpaares mit dem gehaltenen Behälter zum Bewegen des Behälters aufweisen, z. B. auf einer Kreisbahn (z. B. mit Karussell wie bspw. Klammerstern) und/oder entlang einer Geraden (z. B. mit Linearförderer).

In einem Ausführungsbeispiel weist das Verfahren ferner ein voneinander unabhängiges (z. B. entkoppeltes) Schwenken des ersten Klammerarmpaares und des zweiten Klammerarmpaares (z. B. um eine, vorzugsweise gemeinsame, Schwenkachse) weg von dem Behälter zum Freigeben des Behälters, vorzugsweise bewirkt durch unabhängiges Betätigen des ersten Klammerarmpaares und des zweiten Klammerarmpaares, besonders bevorzugt mittels derselben Führungskontur (z. B. Steuerkurve oder Leitkurve), auf.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Ansicht einer Klammervorrichtung mit einem darin gehaltenen Behälter gemäß einem Ausführungsbeispiel der vorliegenden Offenbarung;
- Figur 2: eine Schnittansicht durch die beispielhafte Klammervorrichtung;
- Figur 3: eine perspektivische Ansicht einer Transportvorrichtung gemäß einem Ausführungsbeispiel der vorliegenden Offenbarung;
- Figur 4: eine Draufsicht auf die beispielhafte Transportvorrichtung; und
- Figur 5: eine Ansicht von unten auf die beispielhafte Transportvorrichtung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

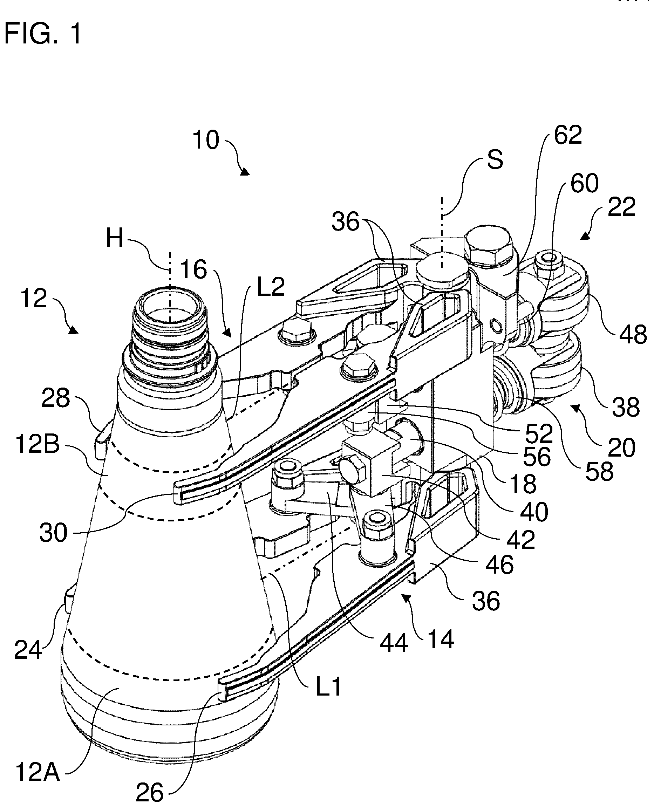

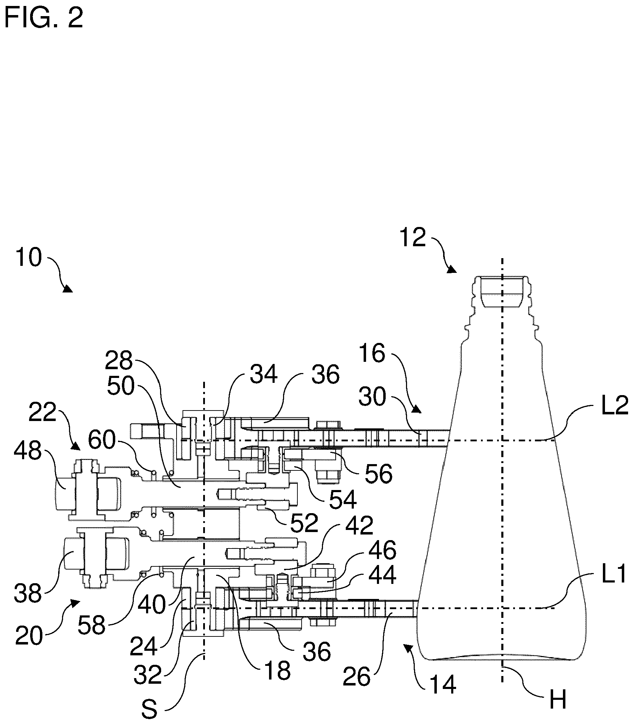

Die Figuren 1 und 2 zeigen eine Klammervorrichtung 10 in unterschiedlichen Ansichten. Die Klammervorrichtung 10 hält einen Behälter 12. Der Behälter 12 weist bevorzugt einen Behälterkörper mit unterschiedlichen Außenumfängen entlang seiner Länge bzw. Höhe auf. Vorzugsweise kann der Behälter 12 als ein sogenannter Konturbehälter ausgeführt sein. Der Behälter 12 kann dennoch sicher von der Klammervorrichtung 10 gehalten sein, wie nachfolgend beispielhaft beschrieben ist. Die Klammervorrichtung 10 weist ein erstes Klammerarmpaar 14 und ein zweites Klammerarmpaar 16 auf. Die Klammervorrichtung 10 kann optional einen Klammerträger 18, eine erste Betätigungseinrichtung 20 und/oder eine zweite Betätigungseinrichtung 22 aufweisen.

Vorzugsweise ist die Klammervorrichtung 10 als eine Doppel-Klammervorrichtung mit den beiden Klammerarmpaaren 14, 16 ausgeführt. Es ist allerdings auch möglich, dass die Klammervorrichtung weitere Klammerarmpaare (nicht dargestellt) aufweist. Allgemein kann die Klammervorrichtung 10 als eine Mehrfach-Klammervorrichtung mit mehreren Klammerarmpaaren 14, 16 ausgeführt sein. Das erste Klammerarmpaar 14 kann zwei erste Klammerarme 24, 26 aufweisen. Das zweite Klammerarmpaar 16 kann zwei zweite Klammerarme 28, 30 aufweisen. Die Klammerarme 24 und 26 (bzw. 28 und 30) können separat ausgebildet sein, wie in den Figuren 1 und 2 dargestellt ist. Es ist möglich, dass die Klammerarme 24 und 26 (bzw. 28 und 30) integral-einstückig miteinander ausgebildet sind.

Vorzugsweise kann das zweite Klammerarmpaar 16 im Wesentlichen baugleich und/oder funktionsgleich zu dem ersten Klammerarmpaar 14 ausgeführt sein. Bevorzugt sind das erste Klammerarmpaar 14 und das zweite Klammerarmpaar 16 im Wesentlichen spiegelsymmetrisch bezüglich einer Mittellängsebene der Klammervorrichtung 10 bzw. bezüglich einer Horizontalebene (im montierten Zustand) ausgebildet. Die Mittellängsebene teilt die Klammervorrichtung 10 auf halber Höhe und verläuft parallel zu Längsachsen L1, L2 der Klammerarmpaare 14, 16.

Die Klammerarmpaare 14, 16 sind jeweils schwenkbar gelagert. Die schwenkbare Lagerung ist bevorzugt an einem Ende der Klammerarmpaare 14, 16 entgegengesetzt zu dem Behälter 12 bzw. den freien Enden der Klammerarmpaare 14, 16 angeordnet. Die Klammerarmpaare 14, 16 sind koaxial zueinander um eine gemeinsame Schwenkachse S schwenkbar.

Im Einzelnen können die ersten Klammerarme 24, 26 bevorzugt gegensinnig zueinander schwenkbar sein. Die zweiten Klammerarme 28, 30 können gegensinnig zueinander schwenkbar sein. Zum Halten des Behälters 12 können die ersten Klammerarme 24, 26 bis zum Anlegen an den Behälter 12 zueinander geschwenkt werden, und die zweiten Klammerarme 28, 30 können bis zum Anlegen an den Behälter 12 zueinander geschwenkt werden. Zum Freigeben des Behälters 12 können die ersten Klammerarme 24, 26 voneinander weggeschwenkt werden, und die zweiten Klammerarme 28, 30 können voneinander weggeschwenkt werden.

Das erste und zweite Klammerarmpaar 14, 16 sind zum gleichzeitigen Halten desselben Behälters 12 angeordnet. Das erste und zweite Klammerarmpaar 14, 16 sind bspw. bezüglich einer Hochachse H des Behälters 12 vertikal versetzt zueinander angeordnet. Beispielsweise ist das zweite Klammerarmpaar 16 (die zwei zweiten Klammerarme 28, 30) oberhalb von dem ersten Klammerarmpaar 14 (den zwei ersten Klammerarmen 24, 26) angeordnet, wie in den Figuren 1 und 2 dargestellt ist, oder umgekehrt.

Das erste Klammerarmpaar 14 kann den Behälter 12 an einem ersten Außenumfangsabschnitt bzw. Mantelabschnitt 12A halten. Das zweite Klammerarmpaar 16 kann den Behälter 12 an einem zweiten Außenumfangsabschnitt bzw. Mantelabschnitt 12B halten. Die Außenumfangsabschnitte 12A, 12B sind bevorzugt jeweils umlaufend bzw. in sich geschlossen. Die Außenumfangsabschnitte 12A und 12B sind bezüglich der Hochachse H des Behälters 12 versetzt zueinander angeordnet. Beispielsweise ist der zweite Außenumfangsabschnitt 12B oberhalb von dem ersten Außenumfangsabschnitt 12A angeordnet, wie in den Figuren 1 und 2 dargestellt ist, oder umgekehrt.

Die Außenumfangsabschnitte 12A und 12B können sich in einer Form und/oder einer Größe bzw. Länge voneinander unterscheiden. Im dargestellten Ausführungsbeispiel ist beispielsweise die Form der Außenumfangsabschnitte 12A und 12B jeweils gleich, nämlich kreisrund bezüglich eines Querschnitts oder kegelstumpfförmig bezüglich der Hochachse H. Die Außenumfangsabschnitte 12A und 12B unterscheiden sich in der Größe. Der zweite Außenumfangsabschnitt 12B weist einen kleineren Umfang und einen kleineren Durchmesser als der erste Außenumfangsabschnitt 12A auf.

Der Behälter 12 kann jeweils an den vorderen bzw. dem Behälter 12 zugewandten Abschnitten der Klammerarmpaare 14, 16 gehalten sein. Im Einzelnen kann der Behälter 12 zwischen den freien Enden der ersten Klammerarme 24, 26 und zwischen den freien Enden der zweite Klammerarme 28, 30 gehalten sein. Die ersten Klammerarme 24, 26 und die zweiten Klammerarme 28, 30 können den Behälter 12 an ihren freien Enden umgreifen. Die ersten Klammerarme 24, 26 und die zweiten Klammerarme 28, 30 können den Behälter 12 zwischen ihren freien Enden unter Aufbringung einer Haltekraft einklemmen. Die Haltekraft kann bspw. durch eine auf das erste Klammerarmpaar 14 wirkende Vorspannung und eine auf das zweite Klammerarmpaar 16 wirkende Vorspannung bewirkt sein.

Die beiden Klammerarmpaare 14, 16 sind unabhängig bzw. entkoppelt voneinander schwenkbar. Das erste Klammerarmpaar 14 kann verschwenkt werden, ohne dass das zweite Klammerarmpaar 16 mitschwenkt, und umgekehrt. Eine Anlageschwenkbewegung des ersten Klammerarmpaares 14 an den zweiten Außenumfangsabschnitt 12B beeinflusst eine Anlageschwenkbewegung des ersten Klammerarmpaares 14 an den ersten Außenumfangsabschnitt 12A nicht, und umgekehrt. Die Anlageschwenkbewegung des zweiten Klammerarmpaares 16 kann bspw. andauern, während das erste Klammerarmpaar 14 bereits an dem ersten Außenumfangsabschnitt 12A anliegt, und umgekehrt (z. B. abhängig von einer Form und/oder Größe der Außenumfangsabschnitte 12A, 12B). Bspw. können die Klammerarmpaare 14, 16, vorzugsweise unter Wirkung einer Vorspannung der Klammerarmpaare 14 und 16, die Anlageschwenkbewegungen gleichzeitig beginnen (z. B. bei Beenden einer Betätigung der Klammerarmpaare 14, 16) und/oder nacheinander beenden (z. B. jeweils zum Zeitpunkt der Anlage an den Behälter 12). Bei der Anlageschwenkbewegung schwenken die ersten Klammerarme 24, 26 aufeinander zu. Bei der Anlageschwenkbewegung schwenken die zweiten Klammerarme 28, 30 aufeinander zu.

Eine Freigabeschwenkbewegung des zweiten Klammerarmpaares 16 weg von dem zweiten Außenumfangsabschnitt 12B beeinflusst eine Freigabeschwenkbewegung des ersten Klammerarmpaares 14 weg von dem ersten Außenumfangsabschnitt 12A nicht, und umgekehrt. Die Freigabeschwenkbewegung des ersten Klammerarmpaares 14 kann bspw. beginnen, bevor die Freigabeschwenkbewegung des zweiten Klammerarmpaares 16 beginnt, und umgekehrt (z. B. abhängig von einer Form und/oder Größe der Außenumfangsabschnitte 12A, 12B). Bspw. können die Klammerarmpaare 14, 16, vorzugsweise unter Wirkung einer Betätigung der Klammerarmpaare 14 und 16, die Freigabeschwenkbewegungen gleichzeitig beenden. Bei der Freigabeschwenkbewegung des ersten Klammerarmpaares 14 schwenken die ersten Klammerarme 24, 26 voneinander weg. Bei der Freigabeschwenkbewegung des zweiten Klammerarmpaares 16 schwenken die zweiten Klammerarme 28, 30 voneinander weg.

Die Klammerarmpaare 14, 16 können sich jeweils entlang einer Längsachse L1 bzw. L2 erstrecken. Die Längsachsen L1, L2 können im Wesentlichen parallel zueinander verlaufen. Die Längsachsen L1, L2 können im Wesentlichen senkrecht zu der Hochachse H verlaufen. Die Längsachsen L1, L2 können im Wesentlichen senkrecht zu der Schwenkachse S verlaufen. Im montierten Zustand können die Längsachsen L1, L2 im Wesentlichen parallel zu einer Horizontalebene verlaufen.

Die Klammerarmpaare 14, 16 können an dem Klammerträger 18 schwenkbar gelagert sein. Die Klammerarmpaare 14, 16 können auf entgegengesetzten Seiten des Klammerträgers 18 an dem Klammerträger 18 schwenkbar gelagert sein. Der Klammerträger 18 kann zwischen den Klammerarmpaaren 14, 16 angeordnet sein, vorzugsweise bezüglich einer Hochachse der Klammervorrichtung 10. Der Klammerträger 18 kann die Klammerarmpaare 14, 16 tragen. Der Klammerträger 18 ist vorzugsweise blockförmig ausgeführt. Der Klammerarmträger erstreckt sich vorzugsweise länglich entlang der Schwenkachse S und/oder parallel zur Hochachse H.

Beispielsweise können die Klammerarmpaare 14, 16 jeweils mittels eines, vorzugsweise länglichen, Drehzapfens 32, 34 des Klammerträgers 18 schwenkbar gelagert sein. Im Einzelnen können die Klammerarme 24, 26, 28, 30 jeweils ein Durchgangsloch aufweisen, z. B. an einem der jeweils freien Ende entgegengesetzten Ende des jeweiligen Klammerarms 24, 26, 28, 30. Die Drehzapfen 32, 34 können sich durch die Durchgangslöcher erstrecken. Es ist möglich, dass Gleitbuchsen zwischen den Drehzapfen 32, 34 und den Durchgangslöchern angeordnet sind.

Die Drehzapfen 32, 34 können sich koaxial zu der Schwenkachse S erstrecken. Die Drehzapfen 32, 34 können sich parallel zu der Hochachse H erstrecken. Der Drehzapfen 32, 34 können auf entgegengesetzten Seiten des Klammerträgers 18 angeordnet sein. Beispielsweise kann der Drehzapfen 34 auf einer Oberseite des Klammerträgers 18 angeordnet sein. Der Drehzapfen 32 kann auf einer Unterseite des Klammerträgers 18 angeordnet sein.

Die ersten Klammerarme 24, 26 können übereinander auf den Drehzapfen 32 aufgesteckt sein. Die zweiten Klammerarme 28, 30 können übereinander auf den Drehzapfen 34 aufgesteckt sein. Die ersten Klammerarme 24, 26 können axial auf dem Drehzapfen 32 gesichert sein. Die zweiten Klammerarme 28, 30 können axial auf dem Drehzapfen 34 gesichert sein. Die jeweilige axiale Sicherung kann bspw. mittels eines Schraubenkopfes einer Schraube erfolgen, die in ein (z. B. Zentral-) Loch im Drehzapfen 32, 34 eingeschraubt ist, vorzugsweise koaxial zur Schwenkachse S.

Angrenzend an die schwenkbare Lagerung zum Klammerträger 18 können die Klammerarmpaare 14, 16 verstärkt sein. Im Einzelnen kann eine Materialstärke der Klammerarme 24, 26, 28, 30 angrenzend an die schwenkbare Lagerung vergrößert sein. Die Klammerarme 24, 26, 28, 30 können bspw. Verstärkungsrippen 36 angrenzend an die schwenkbare Lagerung aufweisen. Die Verstärkungsrippen 36 können bspw. als Wandelemente auf einer Oberseite und/oder einer Unterseite der Klammerarme 24, 26, 28, 30 ausgeführt sein. Die Wandelemente können ringförmige bzw. umlaufende Strukturen sein. Die Verstärkungsrippen 36 können im Abschnitt der Klammerarme 24, 26, 28, 30 angeordnet sein, die den freien Enden der Klammerarme 24, 26, 28, 30 entgegengesetzt sind. Die Verstärkungsrippen 36 können sich in Richtung zu den freien Enden der Klammerarme 24, 26, 28, 30 verjüngen.

Es ist möglich, dass die Klammerarme 24 und 26 sowie 28 und 30 in deren Mittelabschnitten bezüglich der Längsachsen L1 sowie L2 einander zugewandte Anschläge aufweisen. An den Anschlägen können die Klammerarme 24 und 26 sowie 28 und 30 in der Schließstellung aneinander anliegen, wenn sie keinen Behälter 12 halten.

Die Klammerarmpaare 14, 16 können von den Betätigungseinrichtungen 20, 22 um die Drehzapfen 32, 34 bzw. die Schwenkachse S geschwenkt werden. Die Betätigungseinrichtungen 20, 22 können vorzugsweise jeweils als Rollenansteuerungen ausgeführt sein. Bevorzugt können die Betätigungseinrichtungen 20, 22 die Klammerarmpaare 14, 16 zum Freigeben des Behälters 12 zum Öffnen schwenken.

Die Betätigungseinrichtungen 20, 22 sind bevorzugt baugleich und/oder funktionsgleich ausgebildet. Bevorzugt sind die erste Betätigungseinrichtung 20 und die zweite Betätigungseinrichtung 22 im Wesentlichen spiegelsymmetrisch bezüglich der Mittellängsebene der Klammervorrichtung 10 bzw. bezüglich einer Horizontalebene (im montierten Zustand) ausgebildet.

Die Betätigungseinrichtungen 20, 22 können übereinander angeordnet sein. Die Betätigungseinrichtungen 20, 22 können zwischen dem ersten Klammerarmpaar 14 und dem zweiten Klammerarmpaar 16 angeordnet sein, vorzugsweise bezüglich einer Hochachse der Klammervorrichtung 10. Im Einzelnen kann die erste Betätigungseinrichtung 20 teilweise auf einer Oberseite des ersten Klammerarmpaares 14 angeordnet sein. Die zweite Betätigungseinrichtung 22 kann teilweise auf einer Unterseite des zweiten Klammerarmpaares 16 angeordnet sein. Die Betätigungseinrichtungen 20, 22 können sich im Wesentlichen parallel zu den Längsachsen L1, L2 der Klammerarmpaare 14, 16 erstrecken.

Die Betätigungseinrichtungen 20, 22 können von dem Klammerträger 18 getragen sein. Die Betätigungseinrichtungen 20, 22 können sich durch den Klammerträger 18 hindurch erstrecken, vorzugsweise von einer Rückseite bzw. einer dem Behälter 12 abgewandten Seite des Klammerträgers 18 zu einer Vorderseite bzw. einer dem Behälter 12 zugewandten Seite des Klammerträgers 18.

Die Betätigungseinrichtungen 20, 22 sind selbst entkoppelt voneinander, sodass sie sich unabhängig voneinander bewegen können. Die erste Betätigungseinrichtung 20 kann sich bewegen, ohne dass sich die zweite Betätigungseinrichtung 22 bewegt, und umgekehrt.

Die erste Betätigungseinrichtung 20 kann in einem Abschnitt zwischen den freien Enden und der Schwenklagerung der ersten Klammerarme 24, 26 mit den ersten Klammerarmen 24, 26 verbunden sein, vorzugsweise in Mittelabschnitten der ersten Klammerarme 24, 26 bezüglich der Längsachse L1. Die zweite Betätigungseinrichtung 22 kann in einem Abschnitt zwischen den freien Enden und der Schwenklagerung der zweiten Klammerarme 28, 30 mit den zweiten Klammerarmen 28, 30 verbunden sein, vorzugsweise in Mittelabschnitten der zweiten Klammerarme 28, 30 bezüglich der Längsachse L2.

Die erste Betätigungseinrichtung 20 kann vorzugsweise ein Eingabeelement 38, ein Übertragungselement 40, ein Koppelelement 42 und zwei Schwenkarme 44, 46 aufweisen. Es ist möglich, dass die Komponenten 38, 40, 42, 44, 46 zumindest teilweise ineinander integriert sind. Die zweite Betätigungseinrichtung 22 kann mit einem Eingabeelement 48, einem Übertragungselement 50, einem Koppelelement 52 und zwei Schwenkarmen 54, 56 wie die erste Betätigungseinrichtung 20 aufgebaut sein und funktionieren. Die nachfolgenden Detailausführungen zu der ersten Betätigungseinrichtung 20 können somit, mutatis mutandis, entsprechend für die zweite Betätigungseinrichtung 22 gelten.

Das Eingabeelement 38 ist an dem Übertragungselement 40 getragen, vorzugsweise endseitig. Das Eingabeelement 38 kann auf einer dem Behälter 12 abgewandten Seite des Klammerträgers 18 bzw. auf einer Rückseite der Klammervorrichtung 10 bzw. des Klammerträgers 18 angeordnet sein. Das Eingabeelement 38 kann eine mechanische Eingabe empfangen. Das Eingabeelement kann bspw. als eine drehbare Rolle, wie in Figur 1 und 2 dargestellt ist, oder als ein Gleitschuh ausgeführt sein. Das Eingabeelement 38 kann bspw. von einer Leitkurve bzw. Steuerkurve beaufschlagt werden. Das Eingabeelement 38 kann die empfangene Eingabe an das Übertragungselement 40 übertragen.

Das Übertragungselement 40 ist verschiebbar in dem Klammerträger 18 gelagert, vorzugsweise in einer Gleitbuchse. Das Übertragungselement 40 kann länglich, vorzugsweise stangenförmig, sein. Das Übertragungselement 40 kann in Reaktion auf die Eingabe verschoben werden, vorzugsweise parallel zu den Längsachsen L1, L2 und/oder senkrecht zu der Schwenkachse S. Das Übertragungselement 40 trägt das Koppelelement 42, vorzugsweise an einem dem Eingabeelement 38 entgegengesetzten Ende.

Das Koppelelement 42 ist an dem Übertragungselement 40 angebracht, vorzugsweise stirnseitig. Beispielsweise kann das Koppelelement 42 mittels einer Schraube an dem Übertragungselement 40 angebracht sein. Wird das Übertragungselement 40 verschoben, wird das Koppelelement 42 mitverschoben. Das Koppelelement 42 koppelt das Übertragungselement 40 mit den Schwenkarmen 44, 46.

Der Schwenkarm 44 verbindet den ersten Klammerarm 24 mit dem Koppelelement 42. Der Schwenkarm 44 ist an einem Ende schwenkbar mit dem Koppelelement 42 verbunden, z. B. mittels eines Bolzens oder Drehzapfens. Der Schwenkarm 44 ist an einem entgegengesetzten Ende schwenkbar mit dem Klammerarm 24 verbunden, z. B. mittels eines Bolzens oder Drehzapfens.

Der Schwenkarm 46 verbindet den ersten Klammerarm 26 mit dem Koppelelement 42. Der Schwenkarm 46 ist an einem Ende schwenkbar mit dem Koppelelement 42 verbunden, z. B. mittels eines Bolzens oder Drehzapfens. Der Schwenkarm 46 ist an einem entgegengesetzten Ende schwenkbar mit dem ersten Klammerarm 26 verbunden, z. B. mittels eines Bolzens oder Drehzapfens.

Die Schwenkarme 44, 46 sind bevorzugt V-förmig und/oder übereinander (z. B. bezüglich der Hochachse) angeordnet. Die Schwenkarme 44, 46 sind vorzugsweise koaxial bezüglich des Koppelelements 42 schwenkbar. Es sind allerdings bspw. auch parallele Schwenkachsen für die Schwenkarme 44, 46 bezüglich des Koppelelements 42 möglich. Die Schwenkarme 44, 46 sind bezüglich einer Hochachse der Klammervorrichtung 10 vorzugsweise zwischen dem Koppelelement 42 bzw. dem Übertragungselement 40 und dem ersten Klammerarmpaar 14 angeordnet.

In Reaktion auf eine mechanische Eingabe bewirkt eine Verschiebung des Eingabeelements 48 in Richtung zu dem Behälter 12 eine Verschiebung des Übertragungselements 40 in Richtung zu dem Behälter 12. Eine Verschiebung des Übertragungselements 40 in Richtung zu dem Behälter 12 bewirkt eine Verschiebung des Koppelelements 42 in Richtung zu dem Behälter 12. Eine Verschiebung des Koppelelements 42 in Richtung zu dem Behälter 12 bewirkt eine Verschiebung der mit dem Koppelelement 42 schwenkbar verbundenen Enden der Schwenkarme 44, 46 in Richtung zu dem Behälter 12. Eine Verschiebung der schwenkbar mit dem Koppelelement 42 verbundenen Enden der Schwenkarme 44, 46 bewirkt ein Schwenken der Schwenkarme 44, 46 an diesen Enden, da die Schwenkarme 44, 46 an den ersten Klammerarmen 24, 26 abgestützt sind. Das Schwenken der Schwenkarme 44, 46 bewirkt ein Schwenken der ersten Klammerarme 24, 26, vorzugsweise ein Aufschwenken bzw. Öffnen der ersten Klammerarme 24, 26 zum Freigeben des Behälters 12.

Die Klammerarmpaare 14, 16 können mit einer Vorspannung hin zum Schließen bzw. Einschwenken beaufschlagt sein. Bspw. kann die Klammervorrichtung 10 ein erstes Vorspannelement 58 für das erste Klammerarmpaar 14 und zweites Vorspannelement 60 für das zweite Klammerarmpaar 16 aufweisen.

Die Vorspannelemente 58, 60 können separat von den Klammerarmpaaren 14, 16 angeordnet und ausgebildet sein, wie in Figur 1 und 2 dargestellt ist. Es ist möglich, dass die Vorspannelement 58, 60 direkt an den Klammerarmpaaren 14, 16 angeordnet und/oder integral-einstückig mit dem jeweiligen Klammerarmpaar 14 bzw. 16 ausgebildet sind. Bspw. können die Vorspannelemente im Wesentlichen U-förmig sein und/oder das jeweilige Klammerarmpaar 13 bzw. 16 in einer Horizontalebene umgreifen.

Die Vorspannelemente 58, 60 können übereinander angeordnet sein. Die Vorspannelemente 58, 60 können sich parallel zueinander und/oder parallel zu den Längsachsen L1, L2 erstrecken. Die Vorspannelemente 58, 60 können auf einer dem Behälter 12 abgewandten Seite des Klammerträgers 18 angeordnet sein.

Die Vorspannelemente 58, 60 können sich an dem Klammerträger 18 abstützen, vorzugsweise an einer dem Behälter 12 abgewandten Seite des Klammerträgers 18. Das Vorspannelement 58 kann sich an dem Übertragungselement 40 abstützen, vorzugsweise an einem das Eingabeelement 38 tragenden Endabschnitt des Übertragungselements 40. Das Vorspannelement 60 kann sich an dem Übertragungselement 50 abstützen, vorzugsweise an einem das Eingabeelement 48 tragenden Endabschnitt des Übertragungselements 50.

Das Übertragungselement 40 kann sich durch das Vorspannelement 58 hindurch erstrecken bzw. das Vorspannelement 58 kann einen Abschnitt des Übertragungselements 40 umgeben. Das Übertragungselement 50 kann sich durch das Vorspannelement 60 hindurch erstrecken bzw. das Vorspannelement 60 kann einen Abschnitt des Übertragungselements 50 umgeben. Beispielsweise sind die Vorspannelemente 58, 60 als Schraubenfedern ausgeführt.

Beispielsweise können die Vorspannelemente 58, 60 die Betätigungseinrichtungen 20, 22 in Richtung weg von dem Behälter 12 zum Schließen der Klammerarmpaare 14, 16 vorspannen. Im Einzelnen können die Vorspannelemente 58 und 60 die Übertragungselemente 40 und 50 in Richtung weg von dem Behälter 12 vorspannen. Durch die Kopplung mit den Schwenkarmen 44, 46 und 54, 56 werden die Klammerarme 24, 26 und 28, 30 zueinander geschwenkt bzw. eingeschwenkt. Mittels der Vorspannung kann eine Haltekraft auf den Behälter 12 aufgebracht werden, sodass der Behälter 12 kraftschlüssig zwischen den Klammerarm 24, 26 und 28, 30 gehalten werden kann. Mittels der mechanischen Eingabe an den Eingabeelementen 38 und 48 kann die durch die Vorspannelemente 58, 60 bewirkte Vorspannung zum Öffnen der Klammerarmpaare 14 und 16 überwunden werden.

Die Klammervorrichtung 10 kann eine Befestigungseinrichtung 62 aufweisen. Die Befestigungseinrichtung 62 ist dazu ausgebildet, die Klammervorrichtung 10 an einer Transportvorrichtung, z. B. einem Transportkarussell, zu befestigen, z. B. mittels einer Schraubverbindung. Die Befestigungseinrichtung 62 kann mindestens ein Positionierelement aufweisen. Das Positionierelement kann die Klammervorrichtung 10 bei der Befestigung an der Transportvorrichtung korrekt an der Transportvorrichtung positionieren. Das Positionierelement kann bspw. als ein Positionierstift ausgeführt sein. Die Befestigungseinrichtung 62 kann an dem Klammerträger 18 befestigt sein, z. B. an einer Rückseite, Oberseite und/oder Unterseite des Klammerträgers 18.

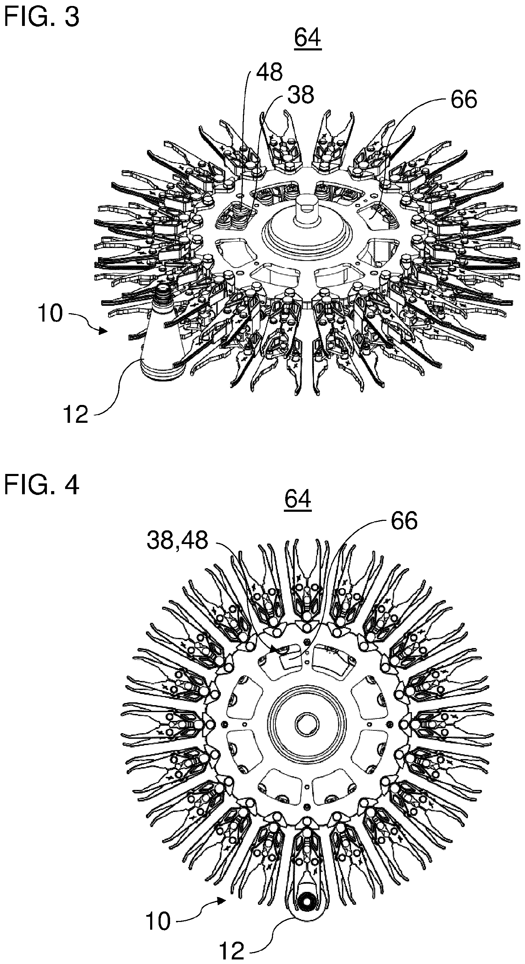

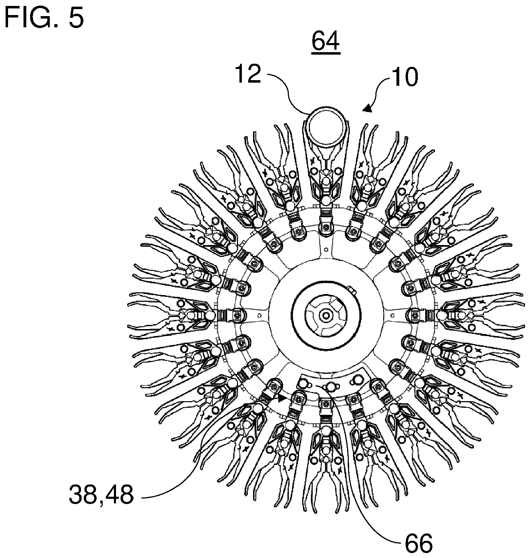

Die Figuren 3 bis 5 zeigen unterschiedliche Ansichten einer Transportvorrichtung 64 mit mehreren Klammervorrichtungen 10. Der besseren Übersicht halber ist lediglich ein Behälter 12 dargestellt. Die Klammervorrichtungen 10 sind dennoch alle so dargestellt, als würden sie jeweils einen Behälter 12 tragen.

Die Transportvorrichtung 64 ist als ein drehbares Transportkarussell ausgeführt. Die Klammervorrichtungen 10 sind, vorzugsweise gleichmäßig, um einen Umfang der Transportvorrichtung 64 herum angeordnet. Die Transportvorrichtung 64 kann als ein sogenannter Klammerstern ausgeführt sein. Aufgrund der Doppelstöckigkeit der Klammervorrichtungen 10 ist der Klammerstern als doppelstöckiger Klammerstern ausgeführt.

Die Transportvorrichtung 64 weist eine Führungskontur 66 auf. Die Eingabeelemente 38, 48 können der gemeinsamen Führungskontur 66 folgen. Die temporäre Wirkverbindung zwischen der Führungskontur 66 und den Klammerarmpaaren 14 und 16 mittels der Betätigungseinrichtungen 20, 22 bewirkt ein Öffnen bzw. Aufschwenken der Klammerarmpaare 14, 16. Der Behälter 12 wird freigegeben.

Bei dem im Ausführungsbeispiel dargestellten Behälter 12, der oben schmaler als unten ist, würde das Eingabeelement 48 zuerst in Kontakt mit der Führungskontur 66 gelangen, da es in einer Richtung parallel zu den Längsachsen L1, L2 weiter nach hinten vorsteht als das Eingabeelement 38. Nachdem das Öffnen des zweiten Klammerarmpaares 16 aufgrund der Wirkverbindung zu der Führungskontur 66 mittels der zweiten Betätigungseinrichtung 22 bereits begonnen hat, gelangt das Eingabeelement 38 in Kontakt mit der Führungskontur 66. Das erste Klammerarmpaar 14 beginnt sich zu öffnen, während das zweite Klammerarmpaar 16 sich weiter öffnet. Der Kontakt kann vorzugsweise zu einem Zeitpunkt erfolgen, zu dem die Klammerarmpaare 14, 16 gleich weit geöffnet (geschlossen) sind.

### Bezugszeichenliste

- 10: Klammervorrichtung
- 12: Behälter
- 12A: Erster Außenumfangsabschnitt
- 12B: Zweiter Außenumfangsabschnitt
- 14: Erstes Klammerarmpaar
- 16: Zweites Klammerarmpaar
- 18: Klammerträger
- 20: Erste Betätigungseinrichtung
- 22: Zweite Betätigungseinrichtung
- 24: Klammerarm
- 26: Klammerarm
- 28: Klammerarm
- 30: Klammerarm
- 32: Drehzapfen
- 34: Drehzapfen
- 36: Verstärkungsrippe
- 38: Eingabeelement
- 40: Übertragungselement
- 42: Koppelelement
- 44: Schwenkarm
- 46: Schwenkarm
- 48: Eingabeelement
- 50: Übertragungselement
- 52: Koppelelement
- 54: Schwenkarm
- 56: Schwenkarm
- 58: Vorspannelement
- 60: Vorspannelement
- 62: Befestigungseinrichtung
- 64: Transportvorrichtung
- 66: Führungskontur (Steuerkurve/Leitkurve)

- H: Hochachse
- S: Schwenkachse
- L1: Längsachse
- L2: Längsachse

## Patentansprüche

1. Klammervorrichtung (10) zum Halten eines Behälters (12) für eine Behälterbehandlungsanlage, aufweisend:
ein erstes Klammerarmpaar (14) und ein zweites Klammerarmpaar (16), die zum gleichzeitigen Halten des Behälters (12) übereinander angeordnet sind, und die voneinander unabhängig
zwischen einer Öffnungsstellung und einer Schließstellung
schwenkbar sind, nämlich koaxial um eine gemeinsame Schwenkachse;
eine erste Betätigungseinrichtung (20), die zum Bewirken des Schwenkens des ersten Klammerarmpaares (14) in Wirkverbindung mit dem ersten Klammerarmpaar (14) ist; und
eine zweite Betätigungseinrichtung (22), die zum Bewirken des Schwenkens des zweiten Klammerarmpaares (16) in Wirkverbindung mit dem zweiten Klammerarmpaar (16) ist, nämlich entkoppelt von der ersten Betätigungseinrichtung (20).

2. Klammervorrichtung (10) nach Anspruch 1, wobei:
das erste Klammerarmpaar (14) zwei erste, vorzugsweise miteinander gekoppelte, Klammerarme (24, 26) zum Anlegen an den Behälter (12) aufweist, die gegensinnig zueinander schwenkbar sind; und
das zweite Klammerarmpaar (16) zwei zweite, vorzugsweise miteinander gekoppelte, Klammerarme (28, 30) zum Anlegen an den Behälter (12) aufweist, die gegensinnig zueinander und unabhängig von den zwei ersten Klammerarmen (24, 26) schwenkbar sind, vorzugsweise koaxial zu den zwei ersten Klammerarmen (24, 26).

3. Klammervorrichtung (10) nach Anspruch 1 oder Anspruch 2, wobei das erste Klammerarmpaar (14) und das zweite Klammerarmpaar (16) derart unabhängig voneinander schwenkbar sind, dass:
der Behälter (12) beim gleichzeitigen Halten durch das erste Klammerarmpaar (14) und das zweite Klammerarmpaar (16) an unterschiedlich großen und/oder unterschiedlich geformten Außenumfangsabschnitten (12A, 12B) des Behälters (12) haltbar ist; und/oder
ein, vorzugsweise mittels Vorspannung bewirktes, Einschwenken des ersten Klammerarmpaares (14) bis zur Anlage an den Behälter (12) fortgesetzt wird, auch wenn ein, vorzugsweise mittels Vorspannung bewirktes, Einschwenken des zweiten Klammerarmpaares (16) durch Anlage an den Behälter (12) bereits endet; und/oder
ein, vorzugsweise mittels Betätigung bewirktes, Aufschwenken des ersten Klammerarmpaares (14) entkoppelt von einem, vorzugsweise mittels Betätigung bewirkten, Aufschwenken des zweiten Klammerarmpaares (16) erfolgt.

4. Klammervorrichtung (10) nach einem der Ansprüche 1 bis 3, wobei
das erste Klammerarmpaar (14) und das zweite Klammerarmpaar (16) baugleich und/oder im Wesentlichen spiegelsymmetrisch bezüglich einer Horizontalebene ausgebildet sind.

5. Klammervorrichtung (10) nach einem der vorherigen Ansprüche, ferner aufweisend:
einen, vorzugsweise im Wesentlichen blockförmigen und/oder länglichen, Klammerträger (18), der das erste Klammerarmpaar (14) und das zweite Klammerarmpaar (16) schwenkbar trägt, vorzugsweise an einander entgegengesetzten Endbereichen des Klammerträgers (18).

6. Klammervorrichtung (10) nach einem der vorherigen Ansprüche, wobei:
die erste Betätigungseinrichtung (20) und die zweite Betätigungseinrichtung (22) übereinander angeordnet, baugleich, im Wesentlichen spiegelsymmetrisch bezüglich einer Horizontalebene ausgebildet, von einem Klammerträger (18) der Klammervorrichtung (10) getragen, als Rollenansteuerungen ausgeführt und/oder zwischen dem ersten Klammerarmpaar (14) und dem zweiten Klammerarmpaar (16) angeordnet sind.

7. Klammervorrichtung (10) nach einem der vorherigen Ansprüche, wobei:
mindestens eine von der ersten Betätigungseinrichtung (20) und der zweiten Betätigungseinrichtung (22) zwei Schwenkarme (44, 46, 54, 56) aufweist, die V-förmig angeordnet, in Reaktion auf eine mechanische Eingabe an der jeweiligen Betätigungseinrichtung (20, 22) hin- und herverschiebbar und/oder an je einem Klammerarm (24, 26, 28, 30) des jeweiligen in Wirkverbindung befindlichen Klammerarmpaares (14, 16) schwenkbar angebracht sind.

8. Klammervorrichtung (10) nach Anspruch 7, wobei:
die zwei Schwenkarme (44, 46, 54, 56), vorzugsweise koaxial, schwenkbar an einem verschiebbaren Übertragungselement (40, 50) angebracht sind, das in einem Klammerträger (18) der Klammervorrichtung (10) verschiebbar gelagert ist, stangenförmig ist und/oder ein Eingabeelement (38, 48), vorzugsweise eine drehbare Rolle oder einen Gleitschuh, trägt.

9. Klammervorrichtung (10) nach einem der vorherigen Ansprüche, ferner aufweisend:
ein erstes Vorspannelement (58), vorzugsweise eine Schraubenfeder, das das erste Klammerarmpaar (14) vorspannt, vorzugsweise zum Schließen; und
ein zweites Vorspannelement (60), vorzugsweise eine Schraubenfeder, das das zweite Klammerarmpaar (16) vorspannt, vorzugsweise zum Schließen,
wobei vorzugsweise das erste Vorspannelement (58) und das zweite Vorspannelement (60) übereinander angeordnet sind und/oder sich parallel erstrecken.

10. Klammervorrichtung (10) nach Anspruch 9, wobei:
mindestens eines von dem ersten Vorspannelement (58) und dem zweiten Vorspannelement (60) sich an einem Klammerträger (18) der Klammervorrichtung (10) abstützt, sich an einer Betätigungseinrichtung (20, 22) der Klammervorrichtung (10) abstützt, einen Abschnitt einer Betätigungseinrichtung (20, 22) der Klammervorrichtung (10) umgibt und/oder auf einer dem Behälter (12) abgewandten Seite eines Klammerträgers (18) der Klammervorrichtung (10) angeordnet ist.

11. Transportvorrichtung (64), vorzugsweise drehbarer Klammerstern, für Behälter (12) für eine Behälterbehandlungsanlage, aufweisend:
mindestens eine Klammervorrichtung (10) nach einem der vorherigen Ansprüche.

12. Transportvorrichtung (64) nach Anspruch 11, ferner aufweisend:
eine gemeinsame Führungskontur (66), die dazu ausgebildet ist, in Wirkverbindung mit dem ersten Klammerarmpaar (14) und dem zweiten Klammerarmpaar (16) das erste Klammerarmpaar (14) und das zweite Klammerarmpaar (16) zu verschwenken, vorzugsweise zum Öffnen des ersten Klammerarmpaares (14) und des zweiten Klammerarmpaares (16).

13. Verfahren zum Transportieren eines Behälters (12) mittels einer Klammervorrichtung (10) nach einem der Ansprüche 1 bis 10 oder mittels einer Transportvorrichtung nach einem der Ansprüche 11 oder 12,
wobei der Behälter (12) einen ersten Außenumfangsabschnitt (12A) und einen zweiten Außenumfangsabschnitt (12B) aufweist, die bezüglich einer Hochachse (H) des Behälters (12) voneinander versetzt sind und die sich in einer Größe und/oder einer Form voneinander unterscheiden,
wobei das Verfahren aufweist:
voneinander unabhängiges, vorzugsweise mittels Vorspannung bewirktes, Schwenken eines ersten Klammerarmpaares (14) und eines zweiten Klammerarmpaares (16), die übereinander angeordnet sind, um eine gemeinsame Schwenkachse, bis sich das erste Klammerarmpaar (14) an dem ersten Außenumfangsabschnitt (12A) und das zweite Klammerarmpaar (16) an dem zweiten Außenumfangsabschnitt (12B) anlegt, sodass der Behälter (12) gleichzeitig von dem ersten Klammerarmpaar (14) und dem zweiten Klammerarmpaar (16) gehalten ist.

14. Verfahren nach Anspruch 13, ferner aufweisend:
voneinander unabhängiges Schwenken des ersten Klammerarmpaares (14) und des zweiten Klammerarmpaares (16) weg von dem Behälter (12) zum Freigeben des Behälters (12), vorzugsweise bewirkt durch unabhängiges Betätigen des ersten Klammerarmpaares (14) und des zweiten Klammerarmpaares (16), besonders bevorzugt mittels derselben Führungskontur (66).

## Claims

1. A clamp device (10) for holding a container (12) for a container processing plant, having:
a first clamp arm pair (14) and a second clamp arm pair (16), which are arranged one above the other for the simultaneous holding of the container (12) and which can be pivoted independently of one another between an open position and a closed position, namely coaxially about a common pivot axis;
a first actuating device (20), which is operatively connected to the first clamp arm pair (14) in order to bring about the pivoting of the first clamp arm pair (14); and
a second actuating device (22), which is operatively connected to the second clamp arm pair (16), namely in a manner decoupled from the first actuating device (20), in order to bring about the pivoting of the second clamp arm pair (16).

2. The clamp device (10) according to Claim 1, wherein:
the first clamp arm pair (14) has two first clamp arms (24, 26), preferably coupled to one another, for application to the container (12), which can be pivoted in opposite directions to one another; and
the second clamp arm pair (16) has two second clamp arms (28, 30), preferably coupled to one another, for application to the container (12), which can be pivoted in opposite directions to one another and independently of the two first clamp arms (24, 26), preferably coaxially with the two first clamp arms (24, 26).

3. The clamp device (10) according to Claim 1 or Claim 2, wherein the first clamp arm pair (14) and the second clamp arm pair (16) can be pivoted independently of one another in such a way that:
when being held simultaneously by the first clamp arm pair (14) and the second clamp arm pair (16), the container (12) can be held on outer circumferential sections (12A, 12B) of the container (12) which are of different sizes and/or different shapes; and/or
a pivoting in of the first clamp arm pair (14), preferably brought about by preloading, is continued until said pair is resting against the container (12), even if a pivoting in of the second clamp arm pair (16), preferably brought about by preloading, is already ending owing to said pair resting against the container (12); and/or
a pivoting open of the first clamp arm pair (14), preferably brought about by means of actuation, takes place in a manner decoupled from a pivoting open of the second clamp arm pair (16), preferably brought about by means of actuation.

4. The clamp device (10) according to any of Claims 1 to 3, wherein
the first clamp arm pair (14) and the second clamp arm pair (16) are of identical construction and/or are of substantially mirror-symmetrical design with respect to a horizontal plane.

5. The clamp device (10) according to any of the preceding claims, further having:
a, preferably substantially block-shaped and/or elongate, clamp carrier (18), which carries the first clamp arm pair (14) and the second clamp arm pair (16) in a pivotable manner,
preferably in mutually opposite end regions of the clamp carrier (18).

6. The clamp device (10) according to any of the preceding claims, wherein:
the first actuating device (20) and the second actuating device (22) are arranged one above the other, are of identical construction, are of substantially mirror-symmetrical design with respect to a horizontal plane, are carried by a clamp carrier (18) of the clamp device (10), are embodied as roller controls and/or are arranged between the first clamp arm pair (14) and the second clamp arm pair (16).

7. The clamp device (10) according to any of the preceding claims, wherein:
at least one of the first actuating device (20) and the second actuating device (22) has two pivot arms (44, 46, 54, 56), which are arranged in a V shape, can be moved back and forth in response to a mechanical input at the respective actuating device (20, 22), and/or are each mounted pivotably on one clamp arm (24, 26, 28, 30) of the respective clamp arm pair (14, 16) which is in operative connection.

8. The clamp device (10) according to Claim 7, wherein:
the two pivot arms (44, 46, 54, 56) are pivotably mounted, preferably coaxially, on a translatable transmission element (40, 50), which is mounted for translation in a clamp carrier (18) of the clamp device (10), is rod-shaped and/or carries an input element (38, 48), preferably a rotatable roller or a sliding shoe.

9. The clamp device (10) according to any of the preceding claims, further having:
a first preloading element (58), preferably a helical spring, which preloads the first clamp arm pair (14), preferably for closing; and
a second preloading element (60), preferably a helical spring, which preloads the second clamp arm pair (16), preferably for closing,
wherein preferably the first preloading element (58) and the second preloading element (60) are arranged one above the other and/or extend parallel.

10. The clamp device (10) according to Claim 9, wherein:
at least one of the first preloading element (58) and the second preloading element (60) is supported on a clamp carrier (18) of the clamp device (10), is supported on an actuating device (20, 22) of the clamp device (10), surrounds a section of an actuating device (20, 22) of the clamp device (10) and/or is arranged on a side of a clamp carrier (18) of the clamp device (10) which faces away from the container (12).

11. A transport device (64), preferably a rotatable clamp star, for containers (12) for a container processing plant, having:
at least one clamp device (10) according to any of the preceding claims.

12. The transport device (64) according to Claim 11, further having:
a common guide contour (66), which is designed to pivot the first clamp arm pair (14) and the second clamp arm pair (16) in operative connection with the first clamp arm pair (14) and the second clamp arm pair (16), preferably for opening the first clamp arm pair (14) and the second clamp arm pair (16).

13. A method for transporting a container (12) by means of a clamp device (10) according to any of Claims 1 to 10 or by means of a transport device according to either of Claims 11 or 12,
wherein the container (12) has a first outer circumferential section (12A) and a second outer circumferential section (12B) which are offset from one another with respect to a vertical axis (H) of the container (12) and which differ from one another in size and/or shape,
wherein the method comprises:
mutually independent pivoting, preferably brought about by means of preloading, of a first clamp arm pair (14) and a second clamp arm pair (16), which are arranged one above the other, about a common pivot axis, until the first clamp arm pair (14) comes to bear against the first outer circumferential section (12A) and the second clamp arm pair (16) comes to bear against the second outer circumferential section (12B), with the result that the container (12) is held simultaneously by the first clamp arm pair (14) and the second clamp arm pair (16).

14. The method according to Claim 13, further comprising:
mutually independent pivoting of the first clamp arm pair (14) and the second clamp arm pair (16) away from the container (12) to release the container (12), preferably brought about by independent actuation of the first clamp arm pair (14) and the second clamp arm pair (16), particularly preferably by means of the same guide contour (66).

## Revendications

1. Dispositif de serrage (10) permettant de maintenir un récipient (12) pour une installation de traitement de récipients, présentant :
une première paire de bras de serrage (14) et une seconde paire de bras de serrage (16) qui sont disposées l'une au-dessus de l'autre pour maintenir simultanément le récipient (12), et qui peuvent pivoter indépendamment l'une de l'autre entre une position d'ouverture et une position de fermeture, à savoir de manière coaxiale autour d'un axe de pivotement commun ;
un premier appareil d'actionnement (20) qui, pour provoquer le pivotement de la première paire de bras de serrage (14), est en liaison active avec la première paire de bras de serrage (14) ; et
un second appareil d'actionnement (22) qui, pour provoquer le pivotement de la seconde paire de bras de serrage (16), est en liaison active avec la seconde paire de bras de serrage (16), à savoir désolidarisé du premier appareil d'actionnement (20).

2. Dispositif de serrage (10) selon la revendication 1, dans lequel :
la première paire de bras de serrage (14) présente deux premiers bras de serrage (24, 26), de préférence accouplés l'un à l'autre, destinés à s'appuyer contre le récipient (12), lesquels peuvent pivoter en sens inverse l'un par rapport à l'autre ; et
la seconde paire de bras de serrage (16) présente deux seconds bras de serrage (28, 30), de préférence accouplés l'un à l'autre, destinés à s'appuyer contre le récipient (12), lesquels peuvent pivoter en sens inverse l'un par rapport à l'autre et indépendamment des deux premiers bras de serrage (24, 26), de préférence de manière coaxiale par rapport aux deux premiers bras de serrage (24, 26).

3. Dispositif de serrage (10) selon la revendication 1 ou la revendication 2, dans lequel la première paire de bras de serrage (14) et la seconde paire de bras de serrage (16) peuvent pivoter indépendamment l'une de l'autre de telle sorte que :
le récipient (12) peut être maintenu, lors du maintien simultané, par la première paire de bras de serrage (14) et par la seconde paire de bras de serrage (16) sur des sections périphériques extérieures (12A, 12B) du récipient (12) de tailles différentes et/ou de formes différentes ; et/ou
un pivotement vers l'intérieur de la première paire de bras de serrage (14), de préférence provoqué au moyen d'une précontrainte, se poursuit jusqu'à l'appui contre le récipient (12), même si un pivotement vers l'intérieur de la seconde paire de bras de serrage (16), de préférence provoqué au moyen d'une précontrainte, se termine déjà par l'appui contre le récipient (12) ; et/ou
un pivotement vers l'extérieur de la première paire de bras de serrage (14), de préférence provoqué au moyen d'un actionnement, est effectué de manière à être désolidarisé d'un pivotement vers l'extérieur de la seconde paire de bras de serrage (16), de préférence provoqué au moyen d'un actionnement.

4. Dispositif de serrage (10) selon l'une des revendications 1 à 3, dans lequel
la première paire de bras de serrage (14) et la seconde paire de bras de serrage (16) sont réalisés de manière à être de construction identique et/ou sensiblement symétriques en miroir par rapport à un plan horizontal.

5. Dispositif de serrage (10) selon l'une des revendications précédentes, présentant en outre :
un support de serrage (18), de préférence sensiblement en forme de bloc et/ou allongé, qui supporte de manière à pouvoir pivoter la première paire de bras de serrage (14) et la seconde paire de bras de serrage (16), de préférence au niveau de zones d'extrémité opposées l'une à l'autre du support de serrage (18).

6. Dispositif de serrage (10) selon l'une des revendications précédentes, dans lequel :
le premier appareil d'actionnement (20) et le second appareil d'actionnement (22) sont disposés l'un au-dessus de l'autre, sont réalisés de manière à être de construction identique, sensiblement symétriques en miroir par rapport à un plan horizontal, sont supportés par un support de serrage (18) du dispositif de serrage (10), sont conçus sous forme de commandes à rouleaux et/ou sont disposés entre la première paire de bras de serrage (14) et la seconde paire de bras de serrage (16).

7. Dispositif de serrage (10) selon l'une des revendications précédentes, dans lequel :
au moins l'un parmi le premier appareil d'actionnement (20) et le second appareil d'actionnement (22) présente deux bras pivotants (44, 46, 54, 56) qui sont disposés en forme de V, peuvent être déplacés en va-et-vient en réponse à une entrée mécanique sur l'appareil d'actionnement (20, 22) respectif et/ou sont montés de manière à pouvoir pivoter sur respectivement un bras de serrage (24, 26, 28, 30) de la paire de bras de serrage (14, 16) respective se trouvant en liaison active.

8. Dispositif de serrage (10) selon la revendication 7, dans lequel :
les deux bras pivotants (44, 46, 54, 56) sont montés de manière à pouvoir pivoter, de préférence de manière coaxiale, sur un élément de transmission (40, 50) déplaçable qui est monté de manière à pouvoir se déplacer dans un support de serrage (18) du dispositif de serrage (10), est en forme de barre et/ou supporte un élément d'entrée (38, 48), de préférence un rouleau rotatif ou un patin coulissant.

9. Dispositif de serrage (10) selon l'une des revendications précédentes, présentant en outre :
un premier élément de précontrainte (58), de préférence un ressort hélicoïdal, lequel précontraint la première paire de bras de serrage (14), de préférence pour la fermeture ; et
un second élément de précontrainte (60), de préférence un ressort hélicoïdal, lequel précontraint la seconde paire de bras de serrage (16), de préférence pour la fermeture,
dans lequel, de préférence, le premier élément de précontrainte (58) et le second élément de précontrainte (60) sont disposés l'un au-dessus de l'autre et/ou s'étendent parallèlement.

10. Dispositif de serrage (10) selon la revendication 9, dans lequel :
au moins l'un parmi le premier élément de précontrainte (58) et le second élément de précontrainte (60) est soutenu sur un support de serrage (18) du dispositif de serrage (10), est soutenu sur un appareil d'actionnement (20, 22) du dispositif de serrage (10), entoure une section d'un appareil d'actionnement (20, 22) du dispositif de serrage (10) et/ou est disposé sur un côté opposé au récipient (12) d'un support de serrage (18) du dispositif de serrage (10).

11. Dispositif de transport (64), de préférence étoile de serrage rotative, pour des récipients (12) pour une installation de traitement de récipients, présentant :
au moins un dispositif de serrage (10) selon l'une des revendications précédentes.

12. Dispositif de transport (64) selon la revendication 11, présentant en outre :
un contour de guidage (66) commun qui est réalisé pour faire pivoter la première paire de bras de serrage (14) et la seconde paire de bras de serrage (16) en étant en liaison active avec la première paire de bras de serrage (14) et la seconde paire de bras de serrage (16), de préférence pour ouvrir la première paire de bras de serrage (14) et la seconde paire de bras de serrage (16).

13. Procédé permettant le transport d'un récipient (12) au moyen d'un dispositif de serrage (10) selon l'une des revendications 1 à 10 ou au moyen d'un dispositif de transport selon l'une des revendications 11 ou 12,
dans lequel le récipient (12) présente une première section périphérique extérieure (12A) et une seconde section périphérique extérieure (12B) qui sont décalées l'une par rapport à l'autre par rapport à un axe vertical (H) du récipient (12) et qui diffèrent l'une de l'autre par leur taille et/ou leur forme,
dans lequel le procédé présente :
le pivotement indépendamment l'une de l'autre, de préférence provoqué au moyen d'une précontrainte, d'une première paire de bras de serrage (14) et d'une seconde paire de bras de serrage (16), lesquelles sont disposées l'une au-dessus de l'autre, autour d'un axe de pivotement commun, jusqu'à ce que la première paire de bras de serrage (14) s'appuie contre la première section périphérique extérieure (12A) et que la seconde paire de bras de serrage (16) s'appuie contre la seconde section périphérique extérieure (12B), de sorte que le récipient (12) est maintenu simultanément par la première paire de bras de serrage (14) et par la seconde paire de bras de serrage (16).

14. Procédé selon la revendication 13, présentant en outre :
le pivotement indépendant l'une de l'autre de la première paire de bras de serrage (14) et de la seconde paire de bras de serrage (16) à l'écart du récipient (12) pour libérer le récipient (12), de préférence provoqué par un actionnement indépendant de la première paire de bras de serrage (14) et de la seconde paire de bras de serrage (16), de manière particulièrement préférée au moyen du même contour de guidage (66).
